# FASCICULE DE BREVET EUROPEEN

(11) **EP 2 374 240 B1**
(45) Date de publication et mention de la délivrance du brevet: **28.08.2019**
(21) Numéro de dépôt: 09802186.8
(22) Date de dépôt: 16.12.2009
(51) Int. Cl.: H04L 9/06

(54) **PROCEDE DE MISE EN OEUVRE D'UN ALGORITHME DE CHIFFREMENT PAR BLOCS**
VERFAHREN ZUM IMPLEMENTIEREN EINES BLOCKVERSCHLÜSSELUNGSALGORITHMUS
METHOD OF IMPLEMENTING A BLOCK ENCRYPTION ALGORITHM

(30) Priorité: 19.12.2008 FR 0858876
(43) Date de publication de la demande: 12.10.2011
(73) Titulaire: Orange, 75015 Paris (FR)
(72) Inventeur: ROBSHAW, Matthew, F-75010 Paris (FR); GILBERT, Henri, F-91440 Bures Sur Yvette (FR)
(86) Numéro de dépôt international: PCT/FR2009/052557
(87) Numéro de publication internationale: WO 2010/070230

(56) Documents cités:
- US-A1- 2001 046 292
- US-B1- 6 324 286
- BOGDANOV A ET AL: "PRESENT: An Ultra-Lightweight Block Cipher" CRYPTOGRAPHIC HARDWARE AND EMBEDDED SYSTEMS - CHES 2007; [LECTURE NOTES IN COMPUTER SCIENCE], SPRINGER BERLIN HEIDELBERG, BERLIN, HEIDELBERG, vol. 4727, 10 septembre 2007 (2007-09-10), pages 450-466, XP019099272 ISBN: 978-3-540-74734-5 cité dans la demande
- BELLARE M ET AL: "Online ciphers and the hash-CBC construction" ADVANCES IN CRYPTOLOGY. CRYPTO 2001. 21ST ANNUAL INTERNATIONAL CRYPTOLOGY CONFERENCE, SANTA BARBARA, CA, AUG. 19 - 23, 2001. PROCEEDINGS; [LECTURE NOTES IN COMPUTER SCIENCE ; VOL. 2139], BERLIN : SPRINGER.; DE, vol. 2139, 1 janvier 2001 (2001-01-01), pages 292-309, XP002484552 ISBN: 978-3-540-42456-7
- Niels Ferguson ET AL: "Chapter 5: Block Cipher Modes" In: "Practical Cryptography", 1 January 2003 (2003-01-01), Wiley Publishing, XP055116531, ISBN: 978-0-47-122357-3 pages 67-82,
- Maria George ET AL: "Linear Feedback Shift Registers in Virtex Devices", , 30 April 2007 (2007-04-30), XP055116573, Retrieved from the Internet: URL:http://japan.origin.xilinx.com/support /documentation/application_notes/xapp210.p df [retrieved on 2014-05-06]
- TADAYOSHI KOHNO ET AL: "Building Secure Cryptographic Transforms, or How to Encrypt and MAC", INTERNATIONAL ASSOCIATION FOR CRYPTOLOGIC RESEARCH,, vol. 20030828:131826, 28 August 2003 (2003-08-28), pages 1-37, XP061000749, [retrieved on 2003-08-28]
- PHILLIP ROGAWAY ED - BIMAL ROY ET AL: "Nonce-Based Symmetric Encryption", 15 July 2004 (2004-07-15), FAST SOFTWARE ENCRYPTION; [LECTURE NOTES IN COMPUTER SCIENCE;;LNCS], SPRINGER-VERLAG, BERLIN/HEIDELBERG, PAGE(S) 348 - 359, XP019007574, ISBN: 978-3-540-22171-5

## Description

La présente invention concerne une technique de mise en oeuvre d'un algorithme de chiffrement par blocs pouvant être exécuté sur un dispositif.

L'invention trouve une application particulièrement intéressante dans le domaine de la cryptographie à bas coût, notamment dans le domaine de la radio-identification (de l'anglais "Radio Frequency Identification", ou "RFID").

La radio-identification est une technique pour stocker et récupérer des données à distance en utilisant des marqueurs appelés radio-étiquettes, ou étiquettes radio (on parle également de "tag RFID"). Une étiquette radio comprend une antenne associée à une puce électronique qui lui permet de recevoir et de répondre à des requêtes radio émises depuis un émetteur-récepteur appelé lecteur. On distingue des étiquettes RFID actives qui disposent d'une batterie leur permettant d'effectuer des calculs, et des étiquettes RFID passives, qui utilisent une énergie fournie par le lecteur. On utilise par exemple les étiquettes radio pour identifier des personnes lorsque les étiquettes sont intégrées dans des passeports, dans des titres de transport, ou dans des cartes de paiement, ou pour identifier des produits comme avec un code barre. Le lecteur est alors un vérifieur en charge de l'authentification des étiquettes qui sont des entités à authentifier. En termes de coût, les prix varient considérablement d'une étiquette à une autre. On comprend que des radio-étiquettes peu onéreuses sont des environnements très contraints en ce sens qu'elles disposent d'une puissance de calcul limitée et d'un espace de stockage également sévèrement limité par des contraintes de coût. On comprend en outre qu'une étiquette RFID passive est d'autant plus limitée, du fait de son alimentation en énergie, par le type d'opérations qu'elle peut effectuer.

Néanmoins, des propositions ont vu le jour ces dernières années pour ajouter des protections cryptographiques sur les radio-étiquettes afin de combattre des menaces telles qu'un clonage d'étiquettes, une traçabilité d'étiquettes, une écoute d'échanges entre une étiquette et un lecteur, et un rejeu de tels échanges dans le but de faire passer une étiquette pirate pour une étiquette valide. Ces protections reposent sur des protocoles cryptographiques dont le fonctionnement nécessite un certain nombre de primitives cryptographiques aptes à assurer des fonctions de base dont les protocoles ont besoin. Beaucoup de primitives de sécurité reposent sur l'utilisation d'un chiffrement par blocs. En effet, des primitives de chiffrement par blocs sont polyvalentes dans le sens où elles peuvent être utilisées selon différents modes opératoires pour construire de nombreuses fonctions de sécurité de base. Par exemple des primitives de chiffrement par blocs sont utilisées pour construire des fonctions pseudo-aléatoires, des fonctions de chiffrement à flot, des codes d'authentification de messages (le terme couramment utilisé est le terme "MAC" pour "Message Authentication Code"), ou encore des fonctions de hachage. Quel que soit le mode opératoire utilisé, les données traitées par un algorithme de chiffrement par blocs sont structurées en blocs de données de taille prédéfinie, par exemple 64 bits, 128 bits.

Dans des dispositifs contraints, comme des étiquettes RFID, des éléments cryptographiques, comme par exemple des clés et des données d'initialisation sont installés en usine, lors de la création de l'étiquette et ne sont plus modifiés ensuite. Ainsi, lorsqu'une étiquette est utilisée au cours de différentes sessions successives, par exemple des sessions d'authentification successives auprès d'un lecteur, l'algorithme de chiffrement par blocs est utilisé de la même façon d'une session à une autre, ce qui peut entraîner des problèmes de sécurité. Ainsi, lorsque l'algorithme de chiffrement par blocs est utilisé lors de chaque session pour générer une suite pseudo-aléatoire utilisée par exemple au cours d'un processus d'authentification avec le lecteur, la génération de la même suite pseudo-aléatoire au cours des différentes sessions est contraire à une propriété recherchée de non répétition et d'imprédictibilité des suites produites. En effet, cela peut compromettre la sécurité de l'authentification.

Un des buts de l'invention est de remédier à des insuffisances de l'état de la technique.

A cette fin, l'invention propose un procédé de mise en oeuvre d'un algorithme de chiffrement par blocs par un dispositif mémorisant une donnée d'initialisation fixe, ledit procédé étant caractérisé en ce qu'il comprend, avant exécution d'une première itération dudit algorithme au cours d'une session :
- une étape de détermination d'une donnée d'initialisation modifiée au moyen d'une fonction déterminée alimentée en entrée par la donnée d'initialisation fixe et une valeur d'état propre à la session, la valeur d'état étant stockée dans le dispositif, ladite donnée d'initialisation modifiée étant destinée à être utilisée pour mettre en oeuvre la première itération de l'algorithme.

De façon avantageuse, la valeur d'état propre à la session est utilisée pour diversifier le premier bloc de données auquel est appliqué l'algorithme de chiffrement par blocs. En pratique, la valeur d'état permet de faire varier une donnée d'initialisation fixée au départ pour la transformer en une donnée d'initialisation modifiée, utilisée par au moins la première itération de l'algorithme de chiffrement par blocs durant la session. Par exemple, la donnée d'initialisation fixe est stockée sur le dispositif contraint, par exemple sur une étiquette radio au cours de l'étape de configuration de l'étiquette, par exemple en usine, et n'est plus modifiée ensuite pour des raisons de contraintes matérielles de l'étiquette. Ainsi, chaque fois que l'étiquette radio est utilisée, et bien que l'étiquette possède une donnée d'initialisation fixe, le bloc produit par la première itération de l'algorithme de chiffrement est différent d'une session d'utilisation de l'algorithme à une autre, grâce à la valeur d'état. La valeur d'état peut être un petit élément d'information, de taille très inférieure à celle de la donnée d'initialisation fixe.

La sécurité offerte par le procédé selon l'invention permet ainsi de réutiliser des étiquettes radio au cours de sessions successives de manière flexible et efficace.

D'autre part, le procédé selon l'invention est avantageux par rapport à des solutions de l'art antérieur qui proposent de stocker dans une mémoire non volatile, par exemple une mémoire de type "EEPROM" (pour "Electrically Erasable Programmable Read Only Memory"), un bloc de données produit par une itération de l'algorithme au cours d'une session, et d'utiliser ce bloc stocké comme valeur de diversification des données d'initialisation de l'algorithme pour une nouvelle session. Cependant, cette solution nécessite d'ajouter de la mémoire pour stocker le bloc produit, qui est de même taille que la donnée d'initialisation fixe, ce qui augmente le coût du dispositif contraint tel qu'une étiquette radio. D'autre part, l'étape d'écriture dans la mémoire est consommatrice d'énergie. Cela peut être problématique lorsqu'une étiquette radio de type étiquette passive qui tire son énergie du lecteur passe rapidement devant le lecteur. Enfin, le temps nécessaire à l'écriture d'une donnée dans une mémoire de type EEPROM peut aller de 5 à 10 ms, ce qui est non négligeable et peut entraver les performances d'un système qui utilise des étiquettes radio. Enfin, l'étape d'écriture du bloc produit ne peut être exécutée qu'en fin de session d'utilisation de l'algorithme de chiffrement, ce qui constitue une contrainte et peut conduire à des problèmes de sécurité, par exemple dans le cas d'une interruption anticipée de la session, avant que la valeur de diversification des données d'initialisation de l'algorithme ne soit renouvelée.

De façon avantageuse, une itération dudit algorithme produisant un bloc d'une taille prédéfinie, ladite valeur d'état est de taille inférieure à la taille du bloc produit.

De manière classique, un mode opératoire d'un algorithme de chiffrement par blocs définit la manière dont les appels à l'algorithme par blocs sont enchaînés, selon un certain nombre d'itérations. A chaque itération, un bloc de données de taille généralement fixe, par exemple 64 ou 128 bits, déduit des données initiales de l'algorithme et des données produites en cours d'exécution, est chiffré à l'aide de l'algorithme de chiffrement par blocs. Un vecteur d'initialisation de même taille que les blocs de données à chiffrer peut être utilisé en entrée d'au moins la première itération de l'algorithme de chiffrement par blocs, et chaque itération de l'algorithme de chiffrement produit un bloc de données. Au contraire, la valeur d'état utilisée par le procédé selon l'invention est équivalente à quelques bits d'information et est donc de taille très inférieure à la taille fixe des blocs de données à chiffrer, du vecteur d'initialisation et des blocs de données produits. Dans un mode de réalisation de l'invention, la taille de la valeur d'état est de 5 bits, ce qui s'avère suffisant pour certaines des applications implémentées sur des étiquettes radio. Avantageusement, le stockage de la valeur d'état nécessite très peu d'espace mémoire et son calcul, très peu de puissance de calcul, ce qui est adapté aux environnements contraints tels que les étiquettes radio.

Dans un exemple de réalisation de l'invention, la fonction déterminée g est mise en oeuvre par des moyens supportés par le dispositif.

Dans cet exemple de réalisation, le calcul de la donnée d'initialisation modifiée au moyen de la fonction g est effectué sur l'étiquette. Cela garantit un bon niveau de sécurité puisque cela permet d'éviter que la donnée d'initialisation modifiée utilisée comme valeur de diversification des données d'initialisation de l'algorithme puisse être choisie par un adversaire.

De façon avantageuse, le procédé selon l'invention comprend une étape de stockage d'une nouvelle valeur d'état propre à une nouvelle session, ladite nouvelle valeur d'état étant obtenue par application d'une fonction de mise à jour à la valeur d'état.

La mise à jour de la valeur d'état et le stockage de la nouvelle valeur d'état sont indépendants des opérations cryptographiques inhérentes aux itérations de l'algorithme de chiffrement par blocs et se font à un rythme différent de ces opérations. Ainsi, il n'est pas nécessaire d'effectuer toutes les itérations de l'algorithme de chiffrement pour obtenir la nouvelle valeur d'état à utiliser au cours d'une nouvelle session. La valeur d'état peut être mise à jour et stockée sur l'étiquette pendant que s'exécutent les opérations cryptographiques. Ainsi, le temps nécessaire à l'obtention de la nouvelle valeur d'état et à son stockage sur le dispositif contraint est donc minimisé. Cet aspect peut également s'avérer avantageux pour éviter que, lorsqu'une session est interrompue prématurément, la valeur d'état utilisée lors de la session interrompue ne soit réutilisée lors de la session suivante.

Avantageusement, la fonction de mise à jour de la valeur d'état est un registre à décalage à rétroaction linéaire.

Dans un exemple de réalisation du procédé selon l'invention, l'algorithme de chiffrement par blocs est l'algorithme PRESENT, utilisé en mode OFB.

L'invention concerne aussi un dispositif apte à mettre en oeuvre un algorithme de chiffrement par blocs comprenant :
- des moyens de chiffrement par blocs, agencés pour exécuter au moins une itération d'un algorithme de chiffrement par blocs au cours d'une session,
- des moyens de stockage, agencés pour stocker une donnée d'initialisation fixe,
le dispositif étant caractérisé en ce que les moyens de stockage sont agencés également pour stocker une valeur d'état propre à la session, et qu'il comprend des moyens de détermination d'une donnée d'initialisation modifiée, adaptés pour déterminer, pour une session donnée, une donnée d'initialisation modifiée à partir de la donnée d'initialisation fixe et de la valeur d'état propre à ladite session, ladite donnée d'initialisation modifiée étant destinée à être utilisée pour mettre en oeuvre la première itération de l'algorithme.

L'invention porte également sur une étiquette radio comportant le dispositif apte à mettre en oeuvre un algorithme de chiffrement par blocs selon l'invention.

D'autres caractéristiques et avantages de la présente invention seront mieux compris à partir de la description et des dessins annexés parmi lesquels :
- la figure 1 représente les étapes du procédé selon un mode particulier de réalisation de l'invention ;
- la figure 2 représente un exemple de réalisation d'un dispositif apte à mettre en oeuvre un algorithme de chiffrement par blocs selon l'invention ;

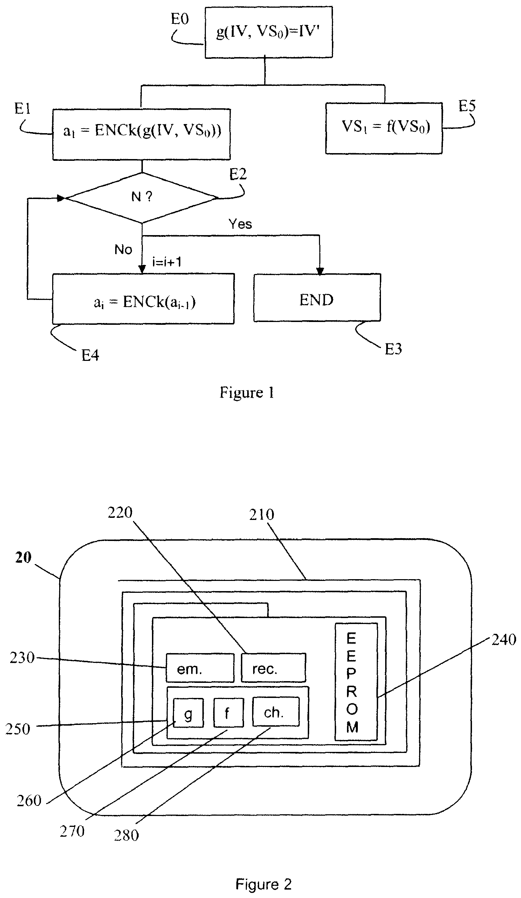

Les étapes du procédé de mise en oeuvre d'un algorithme de chiffrement par blocs selon un mode particulier de réalisation vont maintenant être décrites en relation avec la figure 1.

On connaît différents modes opératoires pour la mise en oeuvre d'un algorithme de chiffrement par blocs. Quel que soit le mode opératoire utilisé, les données traitées par un algorithme de chiffrement par blocs sont structurées en blocs de données de taille prédéfinie, par exemple 64 bits, 128 bits. L'exemple décrit en relation avec la figure 1 utilise un algorithme de chiffrement par blocs selon le mode "OFB" (pour "Output Feedback Mode") afin de produire une suite pseudo-aléatoire constituée des blocs produits par l'algorithme à chaque itération. Dans cet exemple, l'algorithme de chiffrement, paramétré par une clé secrète k est appliqué à une valeur d'initialisation assimilée à un texte en clair. Le chiffré correspondant, obtenu par une première itération de l'algorithme, fournit un premier bloc de la suite chiffrante. Chacun des blocs de suite pseudo-aléatoire suivant est ensuite obtenu par une itération de l'algorithme de chiffrement par blocs à partir du chiffré précédent.

La figure 1 illustre une session S₀ d'utilisation d'un algorithme de chiffrement par blocs en mode OFB, mise en oeuvre par une étiquette radio 20, représentée sur la figure 2.

L'algorithme utilise la clé secrète k et une donnée d'initialisation fixe IV propres à l'étiquette. La clé secrète k et la donnée d'initialisation fixe IV sont par exemple enregistrées dans une mémoire de l'étiquette, lors d'une étape préalable, non représentée sur la figure 1, de configuration de l'étiquette, par exemple en usine. L'étiquette 20 comprend en outre, dans une mémoire 240, une valeur d'état VS₀, propre à la session S₀. La valeur d'état VS₀ est un petit élément d'information de quelques bits seulement. Dans l'exemple décrit ici, une première valeur d'état, non nulle, est enregistrée dans la mémoire 240 lors de l'étape de configuration en usine de l'étiquette. Dans un autre exemple de réalisation, la première valeur d'état est injectée dans la mémoire 240 ultérieurement à l'étape de configuration en usine de l'étiquette.

Dans l'exemple particulier décrit ici, l'algorithme de chiffrement par blocs est utilisé pour générer une suite pseudo-aléatoire de taille prédéterminée égale à N.t (c'est-à-dire N fois la taille prédéfinie t). Cette suite est formée d'une succession de blocs aᵢ, avec 1 ≤ *i* ≤ *N*, respectivement calculés par des itérations successives de l'algorithme de chiffrement, comme cela sera explicité plus loin.

Dans une étape d'initialisation E0 du procédé de chiffrement, l'étiquette 20 réalise une diversification de la donnée d'initialisation fixe IV à l'aide de la valeur d'état VS₀, en déterminant une donnée d'initialisation modifiée IV' à partir de la donnée d'initialisation fixe IV et de la valeur d'état VS₀. A cette fin, une fonction déterminée g, dite "fonction de diversification", est alimentée en entrée par la donnée d'initialisation fixe IV et par la valeur d'état VS₀ propre à la session, et produit en sortie la donnée d'initialisation modifiée IV'. Dans un exemple particulier de réalisation de l'invention, la fonction de diversification g consiste en une fonction de OU EXCLUSIF bit à bit, notée XOR, entre la donnée d'initialisation fixe IV et la valeur d'état VS₀.

L'étape d'initialisation E0 est suivie d'une étape de calcul E1 correspondant à une première itération, autrement dit une itération d'ordre i = 1, de l'algorithme de chiffrement par blocs noté ENCₖ. Lors de cette première itération de l'algorithme de chiffrement, un premier bloc de données aᵢ = a₁ est calculé par chiffrement de la donnée d'initialisation modifiée IV' obtenue à l'étape précédente. La clé secrète k est utilisée comme paramètre de l'algorithme de chiffrement. Le bloc de données a₁ est de taille prédéfinie t, dépendant de l'algorithme ENCₖ choisi. La taille prédéfinie t des blocs est par exemple de 64 ou 128 bits.

Puis une étape E2 de test est réalisée afin de déterminer si le procédé doit se poursuivre par une itération suivante d'ordre i+1 de l'algorithme de chiffrement par blocs. Le test E2 consiste en l'espèce à vérifier si la taille de la suite de données obtenue par l'itération précédente d'ordre i a atteint la taille visée N.t.

Dans le cas où le test est positif (branche 'yes' sur la figure 1), le procédé se termine par une étape E3 de fin. Ainsi, le procédé se termine une fois que la suite pseudo-aléatoire de taille N.t a été générée. Par exemple, lorsque N = 1, la suite pseudo-aléatoire générée correspond au seul bloc de données a₁ généré au cours de l'étape d'initialisation E0.

Dans le cas où le test est négatif (branche 'no' sur la figure 1), le procédé se poursuit par l'itération suivante d'ordre i + 1, avec 1 ≤ *i* ≤ *N* - 1, lors d'une étape E4. Cette étape E4 calcule un (i + 1)-ième bloc de données aᵢ₊₁ par chiffrement du bloc de données aᵢ obtenu à l'étape précédente. L'utilisation, dans cette étape E4 de calcul du bloc de données aᵢ obtenu à l'étape précédente est une caractéristique du mode OFB de l'algorithme de chiffrement par blocs.

Suite à l'étape E4, le test E2 est effectué afin de déterminer si le procédé doit se poursuivre par une itération suivante de l'algorithme de chiffrement. Si le test E2 est positif, la valeur de l'ordre i d'itération de l'algorithme de chiffrement est incrémentée. L'étape E4 est alors réitérée et met en oeuvre une itération suivante de l'algorithme de chiffrement. Si le test E2 est négatif, le procédé se termine par l'étape E3.

L'étape E4 de calcul est itérée (N - 1) fois, jusqu'à ce que la taille de la suite de blocs générés atteigne la taille visée N.t. Ainsi, au cours d'une i-ième itération de l'algorithme de chiffrement ENCₖ, un bloc de données aᵢ est obtenu par chiffrement du bloc de données aᵢ₋₁ obtenu à l'étape de calcul précédente. Au total, l'algorithme de chiffrement est itéré N-fois. Par exemple, si l'on souhaite générer une suite pseudo-aléatoire de taille T, le nombre N d'itérations de l'algorithme est égal à T/t.

Suite à l'étape E0 d'obtention de la donnée d'initialisation modifiée IV', il est prévu une étape E5 de calcul et de stockage dans la mémoire 240 d'une nouvelle valeur d'état VS₁. La nouvelle valeur d'état VS₁ est obtenue en appliquant une fonction de mise à jour f à la valeur d'état précédente VS₀ propre à la session S₀ en cours. La fonction f de mise à jour est par exemple un registre linéaire de décalage de 5 bits (le terme couramment utilisé est le terme anglais "linear feedback shift register", ou "LFSR"). Il est connu qu'un tel registre est apte à générer une séquence de trente et une valeurs non nulles distinctes. La nouvelle valeur d'état VS₁ est adaptée pour être utilisée lors d'une nouvelle session suivante, elle est propre à cette nouvelle session et différente de la valeur d'état précédente VS₀.

L'étape de stockage E5 est indépendante des étapes de chiffrement E1 et E4 décrites précédemment. Ainsi, la nouvelle valeur d'état VS₁ peut être calculée immédiatement après l'étape initiale E0 d'obtention d'une donnée d'initialisation modifiée, comme illustré à la figure 1. Dans une variante de réalisation de l'invention, l'étape de stockage E5 est réalisée en fin de session S₀, après les itérations successives de l'algorithme de chiffrement ENCₖ.

Dans un exemple particulier de réalisation de l'invention, la fonction déterminée g qui produit la valeur d'initialisation modifiée IV' à partir de la valeur d'initialisation IV fixe et de la valeur d'état VS₀ est implémentée sur un lecteur (non représenté sur la figure 1) qui dialogue avec l'étiquette. Dans cet exemple de réalisation, on suppose que le lecteur obtient la valeur d'initialisation fixe propre à l'étiquette, par exemple au cours d'un dialogue avec l'étiquette, ou en consultant une base de données stockant des valeurs d'initialisation fixes d'étiquettes. On suppose également que le lecteur obtient la valeur d'état VS₀ propre à l'étiquette. Le lecteur est adapté pour calculer la valeur d'initialisation modifiée au moyen de la fonction déterminée g et pour la transmettre à l'étiquette. Dans cet exemple de réalisation, l'étiquette nécessite moins de puissance de calcul que si la valeur d'initialisation modifiée était calculée par l'étiquette.

L'invention n'est pas limitée à une fonction f de mise à jour de type registre linéaire de décalage, et dans un autre exemple de réalisation de l'invention, un simple compteur est utilisé comme fonction f de mise à jour de la valeur d'état.

Dans un autre exemple de réalisation de l'invention, la fonction f de mise à jour de la valeur d'état est implémentée sur le lecteur qui dialogue avec l'étiquette. Dans cet exemple de réalisation, on suppose que le lecteur obtient la valeur d'état VS₀, par exemple au cours d'un dialogue avec l'étiquette. On suppose que le lecteur calcule la nouvelle valeur d'état VS₁ au moyen de la fonction de mise à jour f, et la transmet à l'étiquette pour stockage sur celle-ci.

On note que l'algorithme de chiffrement par blocs est exécuté au moins une fois pendant la session S₀ : une fois durant l'étape E1, et de manière optionnelle une ou plusieurs fois durant l'étape E4. La valeur d'état VS₀ n'est mise à jour, au cours de l'étape E5 de stockage, qu'une fois durant la session S₀.

La mémoire dans laquelle la valeur d'état VS₀, ou la nouvelle valeur d'état VS₁, ou d'autres valeurs d'état propres à d'autres sessions sont stockées est une mémoire non volatile de l'étiquette. Par exemple, une mémoire de type "EEPROM" (pour "Electrically Erasable Programmable Read Only Memory"), ou une mémoire de type "FRAM" (pour "Ferroelectric Random Access Memory) peuvent être utilisées.

Dans un deuxième exemple d'utilisation particulier, un algorithme de chiffrement par blocs en mode OFB est utilisé pour chiffrer un message M clair, dit message à chiffrer. Le message à chiffrer, de taille donnée, est découpé en x blocs de données M₀, ..., Mₓ₋₁ de taille prédéfinie t, par exemple 64 ou 128 bits. L'algorithme de chiffrement par blocs, paramétré par la clé secrète k est appliqué, dans une première itération, à une donnée d'initialisation et fournit une première donnée m₀. La première donnée m₀, produit par la première itération de l'algorithme est combinée avec le premier bloc de données M₀ du message M à chiffrer. Par exemple un OU EXCLUSIF bit à bit (noté XOR) est utilisé pour combiner les deux données. La combinaison de la première donnée m₀ et du premier bloc de données M₀ produit un chiffré noté C₀. La première donnée m₀ est ensuite prise en entrée de la deuxième itération de l'algorithme de chiffrement. Une deuxième donnée m₁ est alors combinée avec le deuxième bloc M₁ du message à chiffrer pour produire un deuxième chiffré noté C₁. En itérant l'algorithme de chiffrement x fois de cette façon et en combinant les données obtenues avec les blocs correspondants, on obtient ainsi x chiffrés. Le chiffré du message M à chiffrer est alors obtenu par exemple par concaténation des chiffrés C₀, ... Cₓ₋₁ obtenus lors des itérations successives de l'algorithme.

L'algorithme de chiffrement par blocs ENCₖ est par exemple, et de manière non exhaustive, l'algorithme PRESENT ("PRESENT: An Ultra-Lightweighht Block Cipher", A. Bogdanov, L.R. Knudsen, G. Leander, C. Paar, A. Poschmann, M.J.B. Robshaw, Y. Seurin, and C. Vikkelsoe, in Proceedings of CHES 2007, volume 4727 of LNCS, pages 450-466), "DES" (pour "Data Encryption Standard"), "AES" (pour "Advanced Encryption Standard"). L'algorithme PRESENT est un algorithme de chiffrement par blocs très léger en termes d'implémentation. Il est adapté pour être utilisé dans des environnements tels que des étiquettes RFID.

Le procédé de chiffrement décrit ici met en oeuvre un algorithme de chiffrement par blocs utilisé en mode OFB. L'invention n'est pas limitée à ce mode particulier. Ainsi, dans un mode de réalisation particulier de l'invention, un algorithme de chiffrement par blocs en mode "CTR" (pour "CounTer Mode") est utilisé. Dans le mode CTR, la première étape E1 de calcul est identique à l'étape décrite pour le mode OFB, et le premier bloc de données a₁ est identique au bloc de données a₁ décrit en relation avec la figure 1, a₁ = ENCₖ(g(IV, VS₀)). Dans l'étape E4 de calcul suivante, le deuxième bloc de données a₂ (et les blocs de données suivants aᵢ) est calculé à partir de la donnée d'initialisation modifiée obtenue à l'étape initiale et incrémentée de 1. Ainsi le deuxième bloc de données a₂ = ENCₖ(g(IV, VS0) + 1) (et ai = ENCₖ(g(IV, VS₀) + i-1)).

Dans un autre exemple de réalisation de l'invention, la valeur d'état VS₀ est utilisée à chaque itération de l'algorithme de chiffrement. Ainsi, la première étape de chiffrement E1 est identique à l'étape décrite pour le mode OFB et a₁ = ENCₖ(g(IV, VS₀)). Dans l'étape E4 de calcul suivante, le deuxième bloc de données a₂ (et les blocs de données suivants aᵢ) est calculé à partir de la donnée d'initialisation modifiée obtenue à l'étape initiale E0 et de la valeur d'état VS₀, et a₂= ENCₖ(g(a₁, VS₀)) (et aᵢ= ENCₖ(g(aᵢ₋₁, VS₀))). Dans cet exemple de réalisation, la nouvelle valeur d'état VS1 est calculée et stockée après calcul des N blocs de données a₀, ..., a_{N-1}.

Ce mode de réalisation peut se révéler avantageux. En effet, supposons que l'on exécute plusieurs sessions avec la même étiquette, et donc avec la même donnée d'initialisation IV fixe, selon le mode de réalisation décrit en relation avec la figure 1. Si pour une session j déterminée, la donnée d'initialisation modifiée g(IV, VSⱼ) est égale à un bloc de données aₘ généré au cours d'une session précédente Sₙ, alors la séquence de blocs de données générée au cours de la session Sⱼ sera identique à une partie de la séquence générée au cours de la session précédents Sₙ. Bien que la probabilité d'être dans une telle situation soit faible, ce peut être regrettable en termes de sécurité. En utilisant la nouvelle valeur d'état VS₀ à chaque itération de l'algorithme de chiffrement par blocs, comme décrit dans cet exemple de réalisation, différentes séquences de blocs de données sont produites et ainsi, aucun lien ne peut être établi entre des sessions différentes.

Un dispositif de chiffrement selon l'invention va maintenant être décrit en relation avec la figure 2. L'exemple de dispositif décrit ici est une étiquette radio 20, adaptée pour dialoguer avec un lecteur (non représenté sur la figure 2) selon un protocole cryptographique non décrit. L'invention n'est pas limitée à ce type de dispositif. On comprend que l'invention s'applique à tout dispositif contraint en termes d'espace de stockage et de puissance de calcul, tels certains types de cartes à puce. On suppose que le protocole cryptographique utilise au moins une fonction cryptographique basée sur un algorithme de chiffrement par blocs. L'algorithme de chiffrement par blocs qui est implémenté sur le dispositif utilise le procédé de mise en oeuvre d'un algorithme de chiffrement par blocs selon un des modes de réalisation l'invention décrit précédemment.

Dans l'exemple particulier décrit ici, l'étiquette 20 est un dispositif passif recevant son énergie d'un lecteur lors d'un dialogue avec celui-ci. L'étiquette 20 comprend de manière classique :
- une antenne 210 adaptée pour recevoir et émettre sur la voie radio,
- un module de réception 220, adapté pour recevoir des données du lecteur. Le module de réception 220 coopère avec l'antenne 210 pour constituer des moyens de réception,
- un module d'émission 230, adapté pour émettre vers le lecteur. Le module d'émission 230 coopère avec l'antenne 210 pour constituer des moyens d'émission,
- des moyens de stockage 240, tels une mémoire de type EEPROM, ou une mémoire de type FRAM, adaptés pour stocker une valeur d'état propre à une session selon l'invention. Avantageusement, la valeur d'état correspond à quelques bits d'information. Les moyens de stockage 240 sont également adaptés pour stocker la valeur d'initialisation fixe IV, ainsi que la clé secrète k utilisée comme paramètre de l'algorithme de chiffrement par blocs,
- une puce de silicium 250 comprenant une pluralité de transistors adaptés pour constituer des portes logiques d'une logique câblée non programmable. La logique câblée définit :
   - des moyens 260 de détermination d'une valeur d'initialisation modifiée IV' à partir de la donnée d'initialisation fixe IV et d'une valeur d'état propre à la session en cours. Dans le procédé décrit précédemment, les moyens 260 de détermination sont par exemple la fonction g,
   - des moyens 270 de détermination et de stockage d'une nouvelle valeur d'état propre à une nouvelle session. Dans le procédé décrit précédemment, les moyens 270 sont par exemple la fonction f de mise à jour,
   - des moyens de chiffrement par blocs 280, agencés pour itérer un algorithme de chiffrement par blocs au moins une fois. Les moyens de chiffrement par blocs 280 sont adaptés pour coopérer avec les moyens 260 de détermination d'une valeur d'initialisation modifiée afin qu'une première itération de l'algorithme de chiffrement par blocs utilise la valeur d'initialisation modifiée déterminée par les moyens 260.

Dans un deuxième exemple de réalisation de l'invention, non détaillé, l'étiquette 20 est un dispositif actif. L'étiquette 20 est alors équipée d'une batterie lui permettant d'émettre des signaux. Ainsi, l'étiquette 20 et le lecteur peuvent interagir sur une distance plus importante que dans le cas où l'étiquette 20 est un dispositif passif qui reçoit son énergie du lecteur.

Dans une réalisation particulière de l'invention non détaillée, l'étiquette 20 a une structure comparable à celle d'une carte à puce et comprend un micro-processeur cryptographique, une mémoire de données, une mémoire programme. Dans cet exemple, un programme comportant des instructions pour la mise en oeuvre des étapes du procédé de diversification des données d'initialisation de l'algorithme de chiffrement par blocs tel que décrit précédemment est stocké dans la mémoire de données. Ce programme est adapté pour être exécuté par le micro-processeur.

## Revendications

1. Procédé de mise en oeuvre d'un algorithme de chiffrement par blocs par un dispositif mémorisant une donnée d'initialisation fixe (IV) propre audit dispositif, une première itération de l'algorithme produisant un bloc de taille prédéfinie, ledit procédé étant **caractérisé en ce qu'**il comprend, avant exécution de la première itération dudit algorithme au cours d'une session (S₀) :
- une étape (E0) de détermination d'une donnée d'initialisation modifiée (IV') au moyen d'une fonction déterminée (g) distincte de l'algorithme, alimentée en entrée par la donnée d'initialisation fixe (IV) et une valeur d'état (VS₀) propre à la session et de taille inférieure à la taille du bloc produit, la valeur d'état étant stockée dans le dispositif, ladite donnée d'initialisation modifiée étant destinée à être utilisée pour mettre en oeuvre la première itération de l'algorithme,
- une étape (E5) de stockage d'une nouvelle valeur d'état (VS₁) propre à une nouvelle session, ladite nouvelle valeur d'état étant obtenue par application d'une fonction de mise à jour (f) à la valeur d'état (VS₀), la mise à jour de la valeur d'état et le stockage de la nouvelle valeur d'état étant indépendants des opérations cryptographiques associées aux itérations de l'algorithme de chiffrement par blocs.

2. Procédé de mise en oeuvre d'un algorithme de chiffrement par blocs selon la revendication 1, dans lequel la fonction déterminée (g) est mise en oeuvre par des moyens supportés par le dispositif.

3. Procédé de mise en oeuvre d'un algorithme de chiffrement par blocs selon la revendication 1, dans lequel la fonction (f) de mise à jour de la valeur d'état est un registre à décalage à rétroaction linéaire.

4. Procédé selon la revendication 1, dans lequel l'algorithme de chiffrement par blocs est l'algorithme PRESENT, utilisé en mode OFB.

5. Dispositif (20) apte à mettre en oeuvre un algorithme de chiffrement par blocs et mémorisant une donnée d'initialisation fixe (IV) propre audit dispositif, ledit dispositif comprenant :
- des moyens de chiffrement par blocs (280), agencés pour exécuter au moins une itération d'un algorithme de chiffrement par blocs au cours d'une session (S₀),
- des moyens de stockage (240), agencés pour stocker une donnée d'initialisation fixe (IV),
le dispositif étant **caractérisé en ce que** les moyens de stockage sont agencés également pour stocker une valeur d'état (VS₀) propre à la session et une nouvelle valeur d'état (VS₁) propre à une nouvelle session, ladite nouvelle valeur d'état étant obtenue par application d'une fonction de mise à jour (f) à la valeur d'état (VS₀), la mise à jour de la valeur d'état et le stockage de la nouvelle valeur d'état étant indépendants des opérations cryptographiques associées aux itérations de l'algorithme de chiffrement par blocs, et qu'il comprend des moyens (260) de détermination d'une donnée d'initialisation modifiée, adaptés pour déterminer, pour une session donnée, une donnée d'initialisation modifiée (IV') au moyen d'une fonction déterminée (g) distincte de l'algorithme et alimentée en entrée par la donnée d'initialisation fixe (IV) et la valeur d'état (VS₀) propre à ladite session et de taille inférieure à la taille du bloc produit, la valeur d'état étant stockée dans le dispositif, ladite donnée d'initialisation modifiée (IV') étant destinée à être utilisée pour mettre en oeuvre la première itération de l'algorithme.

6. Etiquette radio comportant un dispositif apte à mettre en oeuvre un algorithme de chiffrement par blocs selon la revendication 5.

## Patentansprüche

1. Verfahren zur Durchführung eines Blockverschlüsselungsalgorithmus durch eine Vorrichtung, die einen der Vorrichtung eigenen festen Initialisierungsdatenwert (IV) speichert, wobei eine erste Iteration des Algorithmus einen Block vordefinierter Größe erzeugt, wobei das Verfahren **dadurch gekennzeichnet ist, dass** es vor der Ausführung der ersten Iteration des Algorithmus während einer Sitzung (S₀) enthält:
- einen Schritt (E0) der Bestimmung eines geänderten Initialisierungsdatenwerts (IV') mittels einer bestimmten Funktion (g) anders als der Algorithmus, die am Eingang mit dem festen Initialisierungsdatenwert (IV) und einem Zustandswert (VS₀) versorgt wird, der der Sitzung eigen und von geringerer Größe als die Größe des erzeugten Blocks ist, wobei der Zustandswert in der Vorrichtung gespeichert wird, wobei der geänderte Initialisierungsdatenwert dazu bestimmt ist, zur Durchführung der ersten Iteration des Algorithmus verwendet zu werden,
- einen Schritt (E5) des Speicherns eines einer neuen Sitzung eigenen neuen Zustandswerts (VS₁), wobei der neue Zustandswert durch Anwendung einer Aktualisierungsfunktion (f) an den Zustandswert (VS₀) erhalten wird, wobei die Aktualisierung des Zustandswerts und das Speichern des neuen Zustandswerts unabhängig von den kryptographischen Vorgängen sind, die den Iterationen des Blockverschlüsselungsalgorithmus zugeordnet sind.

2. Verfahren zur Durchführung eines Blockverschlüsselungsalgorithmus nach Anspruch 1, wobei die bestimmte Funktion (g) von von der Vorrichtung unterstützten Einrichtungen durchgeführt wird.

3. Verfahren zur Durchführung eines Blockverschlüsselungsalgorithmus nach Anspruch 1, wobei die Funktion (f) der Aktualisierung des Zustandswerts ein Schieberegister mit linearer Rückkopplung ist.

4. Verfahren nach Anspruch 1, wobei der Blockverschlüsselungsalgorithmus der Algorithmus PRESENT ist, der im OFB-Modus verwendet wird.

5. Vorrichtung (20), die einen Blockverschlüsselungsalgorithmus durchführen kann und einen der Vorrichtung eigenen festen Initialisierungsdatenwert (IV) speichert, wobei die Vorrichtung enthält:
- Blockverschlüsselungseinrichtungen (280), die eingerichtet sind, um mindestens eine Iteration eines Blockverschlüsselungsalgorithmus während einer Sitzung (S₀) auszuführen,
- Speichereinrichtungen (240), die eingerichtet sind, um einen festen Initialisierungsdatenwert (IV) zu speichern,
wobei die Vorrichtung **dadurch gekennzeichnet ist, dass** die Speichereinrichtungen ebenfalls eingerichtet sind, um einen der Sitzung eigenen Zustandswert (VS₀) und einen einer neuen Sitzung eigenen neuen Zustandswert (VS₁) zu speichern, wobei der neue Zustandswert durch Anwendung einer Aktualisierungsfunktion (f) an den Zustandswert (VS₀) erhalten wird, wobei die Aktualisierung des Zustandswerts und das Speichern des neuen Zustandswerts von den den Iterationen des Blockverschlüsselungsalgorithmus zugeordneten kryptographischen Vorgängen unabhängig sind, und dass sie Einrichtungen (260) zur Bestimmung eines geänderten Initialisierungsdatenwerts enthält, die geeignet sind, für eine gegebene Sitzung einen geänderten Initialisierungsdatenwert (IV') mittels einer bestimmten Funktion (g) zu bestimmen, die sich vom Algorithmus unterscheidet und Eingang mit dem festen Initialisierungsdatenwert (IV) und dem Zustandswert (VS₀) versorgt wird, der der Sitzung eigen ist und eine geringere Größe als die Größe des erzeugten Blocks hat, wobei der Zustandswert in der Vorrichtung gespeichert wird, wobei der geänderte Initialisierungsdatenwert (IV') dazu bestimmt ist, zur Durchführung der ersten Iteration des Algorithmus verwendet zu werden.

6. Funketikett, das eine Vorrichtung aufweist, die einen Blockverschlüsselungsalgorithmus nach Anspruch 5 durchführen kann.

## Claims

1. Method of implementing a block cipher algorithm by a device storing a fixed initialization datum (IV) specific to said device, a first iteration of the algorithm producing a block of predefined size, said method being **characterized in that** it comprises, before execution of the first iteration of said algorithm in the course of a session (S₀) :
- a step (E0) of determining a modified initialization datum (IV') by means of a determined function (g) distinct from the algorithm, supplied as input with the fixed initialization datum (IV) and a state value (VS₀) which is specific to the session and of smaller size than the size of the block produced, the state value being stored in the device, said modified initialization datum being intended to be used to implement the first iteration of the algorithm,
- a step (E5) of storing a new state value (VS₁) specific to a new session, said new state value being obtained by applying an updating function (f) to the state value (VS₀), the updating of the state value and the storage of the new state value being dependent of the cryptographic operations associated with the iterations of the block cipher algorithm.

2. Method of implementing a block cipher algorithm according to Claim 1, in which the determined function (g) is implemented by means supported by the device.

3. Method of implementing a block cipher algorithm according to Claim 1, in which the function (f) for updating the state value is a linear-feedback shift register.

4. Method according to Claim 1, in which the block cipher algorithm is the PRESENT algorithm, used in OFB mode.

5. Device (20) able to implement a block cipher algorithm and storing a fixed initialization datum (IV) specific to said device, said device comprising:
- block cipher means (280), designed to execute at least one iteration of a block cipher algorithm in the course of a session (S₀),
- storage means (240), designed to store a fixed initialization datum (IV),
the device being **characterized in that** the storage means are designed also to store a state value (VS₀) specific to the session and a new state value (VS₁) specific to a new session, said new state value being obtained by applying an updating function (f) to the state value (VS₀), the updating of the state value and the storage of the new state value being independent of the cryptographic operations associated with the iterations of the block cipher algorithm, and **in that** it comprises means (260) for determining a modified initialization datum, suitable for determining, for a given session, a modified initialization datum (IV') by means of a determined function (g) distinct from the algorithm and supplied as input with, the fixed initialization datum (IV) and the state value (VS₀) specific to said session and of smaller size than the size of the block produced said modified initialization datum (IV') being intended to be used to implement the first iteration of the algorithm.

6. Radio tag comprising a device capable of implementing a block cipher algorithm according to Claim 5.
